# EUROPÄISCHE PATENTSCHRIFT

(11) **EP 1 311 571 B1**
(45) Veröffentlichungstag und Bekanntmachung des Hinweises auf die Patenterteilung: **17.08.2005**
(21) Anmeldenummer: 01967230.2
(22) Anmeldetag: 01.08.2001
(51) Int. Cl.: C08G 18/00

(54) **WÄSSRIGE DISPERSIONEN AUS PYRAZOL-BLOCKIERTEN POLYISOCYANATEN UND DARAUS HERGESTELLTE BESCHICHTUNGEN**
AQUEOUS DISPERSIONS OF PYRAZOLE BLOCKED POLYISOCYANATES AND COATINGS PREPARED THEREFROM
DISPERSIONS AQUEUSES DE POLYISOCYANATES BLOQUEES AVEC PYRAZOLES ET REVETEMENTS PREPAREES DE CELLE

(30) Priorität: 14.08.2000 DE 10052875
(43) Veröffentlichungstag der Anmeldung: 21.05.2003
(73) Patentinhaber: Bayer MaterialScience AG, 51368 Leverkusen (DE)
(72) Erfinder: MELCHIORS, Martin, 42799 Leichlingen (DE); IRLE, Christoph, 08960 Sant Just Desvern, Barcelona (ES); PETZOLDT, Joachim, 40789 Monheim (DE); MÜLLER, Heino, 51375 Leverkusen (DE)
(86) Internationale Anmeldenummer: PCT/EP2001/008892
(87) Internationale Veröffentlichungsnummer: WO 2002/014395

(56) Entgegenhaltungen:
- EP-A- 0 159 117
- EP-A- 0 427 028
- EP-A- 0 807 650
- EP-A- 0 942 023

## Beschreibung

Die Erfindung betrifft wässrige Überzugsmittel, die insbesondere zur Erzeugung von chemikalienbeständigen, steinschlagfesten und vergilbungsfreien Überzügen geeignet sind.

Für steinschlagfeste Überzüge in der Automobilindustrie wurden bislang meist organisch gelöste Polyesterharze eingesetzt, die mit Melaminharzen oder blockierten Polyisocyanaten als Härter eingebrannt werden. Ein Verfahren zur Herstellung eines solchen Einbrennfüllers ist z.B. in der DE-A 3 918 510 beschrieben. Eine Verbesserung dieser Systeme wird durch weiterentwickelte, Polyisocyanat-vernetzte Füllerbeschichtungen erzielt (M. Bock, H. Casselmann, H. Blum 'Progress in Development of Waterborne PUR-Primers for the Automotive Industry', Proc. Waterbome, Higher Solids and Powder Coatings Symp. New Orleans 1994).

Moderne, wässrige Bindemittel sind in der Lage, in vielen Anwendungen organisch gelöste Bindemittel zu substituieren. So beschreibt z.B. die EP-A 0 427 028 als Einbrennfüller dienende wasserdispergierbare Bindemittelkombinationen, bestehend aus einer Dispersion eines Carboxylatgruppen enthaltenden urethanmodifizierten Polyesterharzes und einem dieser Dispersion zugegebenen Aminoplastharz und/oder blockiertem Polyisocyanat sowie ggf. zusätzlich einem Emulgator. Als Blockierungsmittel für das Polyisocyanat sind Alkohole, Phenole, Lactame und Oxime genannt.

Bei manchen Anwendungen derartiger Lacke, wie zum Beispiel in der Automobilindustrie, werden die hohen Anforderungen sowohl an die gebrauchsfertigen Beschichtungsmittel als auch an die resultierenden Beschichtungen noch nicht voll erreicht. So ist z.B. an den bislang vorwiegend eingesetzten, Butanonoxim-blockierten Polyisocyanaten problematisch, dass sie beim Einbrennprozess vergilben. Weiterhin besteht der Wunsch nach Einbrennbindemitteln mit höherer Reaktivität.

In der EP-A 0 159 117 werden mit Pyrazolderivaten blockierte Polyisocyanate beschrieben, die eine im Vergleich zu Oximen höhere Reaktivität aufweisen und daher bei niedrigerem Temperaturen vemetzen.

In der WO 97/12924 werden spezielle wasserdispergierbare, Polyether- oder Carboxylatgruppen enthaltende, mit Pyrazolderivaten blockierte Polyisocyanate beschrieben. Nachteilig an den dort beschriebenen Vernetzern ist jedoch, dass solche Produkte in wässrigem Medium nicht lagerstabil sind.

Gegenstand der vorliegenden Erfindung war die Bereitstellung wässriger Beschichtungsmittel enthaltend vergilbungsfreie, lagerstabile Harze auf Basis blockierter Polyisocyanatvemetzer. Diese Aufgabe wurde durch die erfindungsgemäße Kombination aus blockiertem Polyisocyanat und Urethangruppen enthaltendem Polyol gelöst.

Die erfindungsgemäßen Überzugsmittel enthalten eine in Wasser und ggf. organischen Lösemitteln dispergiert vorliegende physikalische Mischung aus
- A: mindestens einem Urethangruppen und Hydroxygruppen enthaltenden Polyol, welches chemisch gebundene hydrophile Gruppen enthält und
- B: mindestens einem mit Pyrazolderivaten der allgemeinen Formel (I) 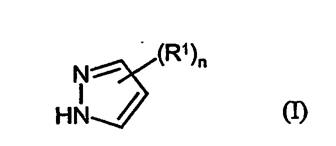
blockierten Polyisocyanat,
wobei R¹ für einen oder mehrere (cyclo)aliphatische Kohlenwasserstoffreste mit jeweils 1 bis 12, bevorzugt 1 bis 4 C-Atomen, steht, welche keine chemisch gebundenen hydrophilen Gruppen enthält, und worin n eine ganze Zahl von 0 bis 3 sein kann,
wobei das Mengenverhältnis der Komponenten A und B so bemessen ist, dass das molare Verhältnis von blockierten NCO-Gruppen des Vernetzers B zu NCO-reaktiven Gruppen des Polyols A bzw. Polyol A enthaltender Bindemittelgemische 0,2 : 1 bis 5 : 1 beträgt.

Es wurde überraschend gefunden, dass sich mit Pyrazolderivaten blockierte Polyisocyanate mit Hilfe der Urethangruppen enthaltenden Polyole stabil in Wasser dispergieren lassen. Dabei erfüllen die erfindungsgemäßen, Urethangruppen enthaltenden Polyole die Aufgabe eines "Emulgators" für die mit Pyrazolderivaten blockierten Polyisocyanate. Gleichzeitig sind die Urethangruppen enthaltenden Polyole aber auch Reaktionspartner für die blockierten Polyisocyanate. Nach Abspaltung des Blockierungsmittels bei erhöhter Temperatur vernetzen die OH-Gruppen mit den dann freigesetzten funktionellen Gruppen der Polyisocyanatvernetzer.

Die erfindungsgemäßen Urethangruppen enthaltenden Polyole A werden hergestellt aus
- A1: 5 - 80 % , bevorzugt 10 - 60 % Polyisocyanaten
- A2: 10 - 80 %, bevorzugt 36 - 70 % Polyolen und/oder Polyaminen mit einem mittleren Molgewicht Mₙ von mindestens 400,
- A3: 2 - 15 %, bevorzugt 3 - 10 % Verbindungen, die mindestens zwei gegenüber Isocyanatgruppen reaktive Gruppen und mindestens eine zur Anionenbildung befähigte Gruppe aufweisen,
- A4: 0 - 20 %, bevorzugt 1 - 10 % niedermolekulare Polyole
- A5: 0 - 20 % Verbindungen, die monofunktionell sind oder aktiven Wasserstoff unterschiedlicher Reaktivität enthalten, wobei sich diese Bausteine jeweils am Kettenende des Urethangruppen enthaltenden Polymers befinden und/ oder
- A6: 0 - 20 % Verbindungen, die von A2, A3, A4 und A5 verschieden sind und mindestens zwei, mit NCO-Gruppen reaktive Gruppen enthalten.

Die erfindungsgemäßen Urethangruppen enthaltenden Polyole können zum Beispiel so hergestellt werden, dass zunächst ein Isocyanat-funktionelles Präpolymer hergestellt wird und in einem zweiten Reaktionsschritt durch Reaktion mit Verbindungen A5 und/ oder A6 eine OH-funktionelle Verbindung erhalten wird. Geeignet sind z.B. die in der EP-A 0 355 682 beschriebenen Polyurethanharze. Die Herstellung kann aber auch so erfolgen, dass das OH-Gruppen enthaltende Polyurethanharz direkt durch Umsetzung der Komponenten A1) bis A6) gebildet wird, wie z.B in EP-A 0 427 028 beschrieben.

Die erfindungsgemäß verwendeten Polyurethanharze besitzen im allgemeinen ein mittleres Molekulargewicht Mₙ (aus der Stöchiometrie des Ausgangsmaterials berechnet) von 1 600 bis 50 000, vorzugsweise 1 600 bis 10 000, eine Säurezahl von 10 bis 80, vorzugsweise 15 bis 40 und eine Hydroxylzahl von 16,5 bis 200, vorzugsweise 30 bis 130. Es ist zumindest im alkalischen Milieu wasserdispergierbar und bei niedrigen Molekulargewichten unter diesen Bedingungen häufig sogar wasserlöslich.

Bei den Polyisocyanaten, vorzugsweise Diisocyanaten (A1) handelt es sich um die auf dem Polyurethan- bzw. Lackgebiet bekannten Verbindungen, wie aliphatische, cycloaliphatische oder aromatische Diisocyanate. Diese besitzen vorzugsweise die Formel Q(NCO)₂, wobei Q für einen Kohlenwasserstoffrest mit 4 bis 40 C-Atomen insbesondere 4 bis 20 C-Atomen steht und vorzugsweise einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen bedeutet. Beispiele derartiger bevorzugt einzusetzender Diisocyanate sind Tetramethylendiisocyanat, Hexamethylendiisocyanat, Dodecamethylendiisocyanat, 1,4-Diisocyanatocyclohexan, 3-Isocyanatomethyl-3,5,5-trimethylcyclohexylisocyanat (Isophorondiisocyanat), 4,4'-Diisocyanatodicyclohexylmethan, 4,4'-Diisocyanatodicyclohexylpropan-(2,2), 1,4-Diisocyanatobenzol, 2,4- oder 2,6-Diisocyanatotoluol bzw. Gemische dieser Isomeren, 4-4'- oder 2,4'-Diisocyanatodiphenylmethan, 4,4'-Diisocyanatodiphenylpropan-(2,2), p-Xylylendiisocyanat und α,α,α',α'-Tetramethyl-m- oder p-Xylylendiisocyanat sowie aus diesen Verbindungen bestehende Gemische.

Neben diesen einfachen Polyisocyanaten sind auch solche geeignet, die Heteroatome in dem die Isocyanatgruppen verknüpfenden Rest enthalten und oder eine Funktionalität von mehr als 2 NCO-Gruppen pro Molekül besitzen. Beispiele hierfür sind Polyisocyanate, die Carbodiimidgruppen, Allophanatgruppen, Isocyanuratgruppen, Urethangruppen, acylierte Harnstoffgruppen oder Biuretgruppen aufweisen, sowie 4-Isocyanatomethyl-1,8-octandiisocyanat (Nonantriisocyanat). Bezüglich weiterer geeigneter Polyisocyanate sei beispielsweise auf die DE-A 2 928 552 verwiesen. Der Anteil an Polyisocyanaten (A1) in dem Polyurethanharz liegt in der Regel bei ca. 5 bis 80 Gew.-%, vorzugsweise 10 bis 60 Gew.-%, bezogen auf das Polyurethanharz.

Die Polyole / Polyamine gemäß (A2) besitzen vorzugsweise ein mittleres Molekulargewicht Mₙ von 400 bis 5000, insbesondere 800 bis 2000. Ihre Hydroxylzahl bzw. Aminzahl beträgt im allgemeinen 22 bis 400, vorzugsweise 50 bis 200 und insbesondere 80 bis 160 mg/KOH/g. Beispiele für derartige Polyole, bei denen es sich um die aus der Polyurethanchemie bekannten Verbindungen handelt, sind Polyetherpolyole, Polyesterpolyole, Polycarbonatpolyole, Polyesteramidpolyole, Polyamidpolyole, Epoxidharzpolyole und deren Umsetzungsprodukte mit CO₂, Polyacrylatpolyole und ähnliche Verbindungen. Derartige Polyole, die auch in Mischung eingesetzt werden können, sind beispielsweise in DE-A 2 020 905, DE-A 2 314 513 und DE-A 3 124 784 sowie in EP-A 0 120 466 beschrieben.

Von diesen Polyolen sind die Polyether- und Polyesterpolyole bevorzugt, insbesondere solche, die nur endständige OH-Gruppen aufweisen und eine Funktionalität von kleiner gleich 3, vorzugsweise von 2,8 bis 2 und insbesondere von 2 besitzen. Als Polyetherpolyole sind hier beispielsweise Polyoxyethylenpolyole, Polyoxypropylenpolyole, Polyoxybutylenpolyole zu nennen und vorzugsweise Polytetrahydrofurane mit endständigen OH-Gruppen.

Die erfindungsgemäß besonders bevorzugten Polyesterpolyole sind die bekannten Polykondensate aus Di- sowie gegebenenfalls Poly(Tri,Tetra)olen und Di- sowie gegebenenfalls Poly(Tri,Tetra)carbonsäuren oder Hydroxycarbonsäuren oder Lactonen. Anstelle der freien Polycarbonsäuren können auch die entsprechenden Polycarbonsäureanhydrid oder entsprechende Polycarbonsäureester von niederen Alkoholen zur Herstellung der Polyester verwendet werden. Beispiele für geeignete Diole sind Ethylenglykol, Butylenglykol, Diethylenglykol, Triethylenglykol, Polyalkylenglykole wie Polyethylenglykol, weiterhin Propandiol, Butandiol(1,4), Hexandiol(1,6), Neopentylglykol oder Hydroxypivalinsäureneopenthylglykolester, wobei die drei letztgenannten Verbindungen bevorzugt sind. Als gegebenenfalls mit einzusetzende Polyole sind hier beispielsweise Trimethylolpropan, Glycerin, Erythrit, Pentaerythrit, Triemthylolbenzol oder Trishydroxyethylisocyanurat zu nennen.

Anstelle von OH-Gruppen können die Verbindungen der Komponente A2) auch primäre oder sekundäre Aminogruppen (anteilig oder komplett) als NCO-reaktive Gruppen enthalten.

### Als Dicarbonsäuren kommen beispielsweise in Frage:

Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlor-phthalsäure, Maleinsäure, Fumarsäure, Itaconsäure, Malonsäure, Korksäure, 2-Methylbernsteinsäure, 3,3-Diethylglutarsäure, 2,2-Dimethylbernsteinsäure. Anhydride dieser Säuren sind ebenfalls brauchbar, soweit sie existieren. Für die Belange der vorliegenden Erfindung werden die Anhydride infolgedessen durch den Ausdruck "Säure" umfasst. Es können auch Monocarbonsäuren, wie Benzoesäure und Hexancarbonsäure verwendet werden, vorausgesetzt, dass die mittlere Funktionalität des Polyols höher als 2 ist. Gesättigte aliphatische oder aromatische Säuren sind bevorzugt, wie Adipinsäure oder Isophthalsäure. Als gegebenenfalls in kleineren Mengen mitzuverwendende Polycarbonsäure sei hier Trimellitsäure genannt.

Die Hydroxycarbonsäure, die als Reaktionsteilnehmer bei der Herstellung eines Polyesterpolyols mit endständigem Hydroxyl verwendet werden können, sind u. a. beispielsweise Hydroxycapronsäure, Hydroxybuttersäure, Hydroxydecansäure, Hydroxystearinsäure und dergleichen. Brauchbare Lactone sind u. a. Caprolacton, Butyrolacton und dergleichen.

Die Menge an Komponente (A2) in dem Polyurethanharz liegt üblicherweise zwischen 10 und 80 Gew.-%, vorzugsweise 36 und 70 Gew.-%, bezogen auf das Polyurethanharz.

Für den Baustein (A3) geeignete Verbindungen sind beispielsweise in US-A 3 412 054 und US-A 3 640 924 sowie in DE-A 2 624 442 und DE-A 2 744 544 beschrieben, auf die hier Bezug genommen wird. Insbesondere kommen hierfür solche Polyole, vorzugsweise Diole, infrage, die wenigstens eine Carboxyl-Gruppe, im allgemeinen 1 bis 3 Carboxyl-Gruppen je Molekül enthalten. Als zur Anionenbildung befähigte Gruppen sind auch Sulfonsäuregruppen geeignet. Beispiel hierfür sind Dihydroxycarbonsäuren, wie α,α-Dialkylolalkansäuren, insbesondere α,α-Dimethylol-alkansäuren, wie 2,2-Dimethylolessigsäure, 2,2-Dimethylolpropionsäure, 2,2-Dimethylolbuttersäure, 2,2-Dimethylolpentansäure, Dihydroxybernsteinsäure, weiterhin Polyhydroxysäuren, wie Glukonsäure. Besonders bevorzugt ist dabei 2,2-Dimethyllolpropionsäure. Aminogruppenhaltige Verbindungen (A3) sind beispielsweise α,δ-Diaminovaleriansäure, 2,4-Diamino-toluol-sulfonsäure-(5) udgl. Es können auch Gemische dieser Verbindungen (A3) zum Einsatz kommen. Die Menge an Komponente (A3) in dem Polyurethanharz liegt im allgemeinen bei 2 bis 15, vorzugsweise bei 3 bis 10 Gew.-%, bezogen auf das Polyurethanharz.

Die gegebenenfalls zum Aufbau der Polyurethanharze eingesetzten niedermolekularen Polyole (A4) bewirken in der Regel eine Versteifung der Polymerkette. Sie besitzen im allgemeinen ein Molekulargewicht von etwa 62 bis 400, vorzugsweise 62 bis 200. Sie können aliphatische, alicyclische oder aromatische Gruppen enthalten. Ihre Menge liegt im allgemeinen bei 0 bis 20, vorzugsweise 1 bis 10 Gew.-%, bezogen auf die Polyolkomponenten (A2) bis (A4). Genannt seien hier beispielsweise die niedermolekularen Polyole mit bis zu etwa 20 Kohlenstoffatomen je Molekül, wie z.B. Ethylenglykol, Diethylenglykol, 1,2-Propandiol, 1,3-Propandiol, 1,4-Butandiol, 1,3-Butylenglykol, Cyclohexandiol, 1,4-Cyclohexandimethanol, 1,6-Hexandiol, Bisphenol A (2,2-Bis(4-hydroxyphenyl)propan), hydriertes Bisphenol A (2,2-Bis(4-hy-droxycyclohexyl)propan) sowie deren Mischungen, sowie als Triol, Trimethylolpropan.

Das erfindungsgemäß eingesetzte Polyurethanharz kann auch Bausteine (A5) enthalten, die sich jeweils an den Kettenenden befinden und diese abschließen (Kettenstopper). Diese Bausteine leiten sich zum einen von monofunktionellen, mit NCO-Gruppen reaktiven Verbindungen ab, wie Monoaminen, insbesondere mono-sekundären Aminen, oder Monoalkoholen. Genannt seien hier beispielsweise: Methylamin, Ethylamin, Propylamin, Butylamin, Octylamin, Laurylamin, Stearylamin, Isononyloxypropylamin, Dimethylamin, Diethylamin, Dipropylamin, Dibutylamin, N-Methylaminopropylamin, Diethyl(methyl)aminopropylamin, Morpholin, Piperidin, bzw. geeignete substituierte Derivate davon, Amidamine aus diprimären Aminen und Monocarbonsäuren, Monoketime von diprimären Aminen, primär/tertiäre Amine, wie N,N-Dimethylaminopropylamin und dergleichen.

Vorzugsweise kommen für (A5) Verbindungen in Betracht, die aktiven Wasserstoff mit gegenüber NCO-Gruppen unterschiedlicher Reaktivität enthalten, wie Verbindungen, die neben einer primären Aminogruppe auch sekundäre Aminogruppen, oder neben einer OH-Gruppe auch COOH-Gruppen oder neben einer Aminogruppe (primär oder sekundär) auch OH-Gruppen aufweisen, wobei die letzteren bevorzugt sind. Beispiele hierfür sind: primäre/sekundäre Amine, wie 3-Amino-1-Methylaminopro-pan, 3-Amino-1-Ethylaminopropan, 3-Amino-1-cy-clohexylaminopropan, 3-Amino-1-Methylaminobutan; Mono-Hydroxycarbonsäuren, wie Hy-droxyessigsäure, Milchsäure oder Äpfelsäure, weiterhin Alkanolamine wie N-Aminoethylethanolamin, Ethanolamin, 3-Aminopropanol, Neopentanolamin und besonders bevorzugt Diethanolamin. Auf diese Weise werde zusätzlich funktionelle Gruppen in das polymere Endprodukt eingebracht und dieses damit reaktionsfähiger gegenüber Materialien, wie Härtern, gemacht. Die Mengen an (A5) in dem Polyurethanharz liegt üblicherweise zwischen 0 und 20, vorzugsweise 0 und 10 Gew.-% bezogen auf das Polyurethanharz.

Zusätzlich zu den Bausteinen gemäß (A5) oder anstelle dieser kann das erfindungsgemäße Polyurethanharz auch noch Bausteine (A6) enthalten, die sich von sogenannten Kettenverlängerern ableiten, wenngleich diese Variante weniger bevorzugt ist. Als solche kommen die hierfür bekannten, mit NCO-Gruppen reaktiven und vorzugsweise difunktionellen Verbindungen in Frage, die nicht identisch mit (A2), (A3), (A4) und (A5) sind und zumeist mittlere Molekulargewichte bis zu 400 aufweisen. Genannt seien hier beispielsweise Wasser, Hydrazin, Adipinsäuredihydrazid, Poly(Di)amine, wie Ethylendiamin, Diethylentriamin, Dimethylethylendiamin, Diaminopropan, Hexamethylendiamin, Isophrondiamin, 4,4'-Diaminodicyclohexylmethan, die auch Substituenten, wie OH-Gruppen, tragen können, sowie Mischungen der genannten Komponenten. Solche Polyamine sind beispielsweise in der DE-A 3 644 371 beschrieben. Die Menge (A6) im Polyurethanharz liegt üblicherweise bei 0 und 20 %, bevorzugt bei 0 und 10 %.

Die Herstellung des erfindungsgemäß eingesetzten Polyurethanharzes erfolgt bevorzugt in der Weise, dass man aus den Polyisocyanaten gemäß (A1), den Polyolen gemäß (A2) und gegebenenfalls den niedermolekularen Polyolen gemäß (A4) sowie den Verbindungen gemäß (A3) zunächst ein Polyurethan-Präpolymer herstellt, das im Mittel mindestens 1,7, vorzugsweise 2 bis 2,5 freie Isocyanatgruppen pro Molekül enthält, dieses Präpolymer dann mit Verbindungen gemäß (A5) und/oder (A6) in nicht-wässrigem System umsetzt und das vollständig ausreagierte Polyurethanharz üblicherweise anschließend neutralisiert und ins wässrige System überführt. Gegebenenfalls kann auch die Neutralisation sowie die Umsetzung mit (A6) nach der Überführung ins wässrige System erfolgen.

Das Polyurethan-Präpolymer wird nach bekanntem Verfahren hergestellt. Hierbei wird das Polyisocyanat gegenüber den Polyolen (A2) bis (A4) im Überschuss eingesetzt, sodass ein Produkt mit freien Isocyanatgruppen resultiert. Diese Isocyanatgruppen sind end- und/oder seitenständig, vorzugsweise endständig. Zweckmäßigerweise ist dabei die Menge an Polyisocyanat so groß, dass das Äquivalentverhältnis von Isocyanatgruppen zur Gesamtzahl der OH-Gruppen in den Polyolen (A2) bis (A4) 1,05 bis 1,4, vorzugsweise 1,1 bis 1,3 beträgt.

Die Umsetzung zur Herstellung des Präpolymers wird normalerweise bei Temperaturen von 60 bis 140°C, je nach Reaktivität des eingesetzten Isocyanats, durchgeführt. Zur Beschleunigung der Urethanisierungsreaktion können geeignete Katalysatoren, wie sie zur Beschleunigung der NCO-OH-Reaktion dem Fachmann bekannt sind, eingesetzt werden. Beispiele sind tert. Amine wie z.B. Triethylamin, Organozinnverbindungen wie z.B. Dibutylzinnoxid, Dibutylzinndilaurat oder Zinn-bis(2-ethyl-hexanoat) oder andere metallorganische Verbindungen. Die Urethanisierungsreaktion wird vorzugsweise in Gegenwart von gegenüber Isocyanaten inaktiven Lösungsmitteln durchgeführt. Hierfür kommen insbesondere solche Lösungsmittel in Betracht, die mit Wasser verträglich sind, wie die weiter unten genannten Ether, Ketone und Ester sowie N-Methylpyrrolidon. Die Menge dieses Lösungsmittels überschreitet zweckmäßigerweise nicht 20 Gew.-% und liegt vorzugsweise im Bereich von 5 bis 15 Gew.-%, jeweils bezogen auf die Summe aus Polyurethanharz und Lösungsmittel. Zweckmäßigerweise wird dabei das Polyisocyanat der Lösung der übrigen Komponenten langsam zugegeben.

Das Präpolymer bzw. dessen Lösung wird dann mit der Verbindung gemäß (A5) und/oder (A6) umgesetzt, wobei die Temperatur zweckmäßigerweise im Bereich von 50 bis 100°C, vorzugsweise zwischen 60 und 90°C liegt, bis der NCO-Gehalt in dem Präpolymer praktisch auf Null abgesunken ist. Hierzu wird die Verbindung (A5) im Unterschluss oder in geringem Überschuss eingesetzt, wobei die Mengen zumeist 40 bis 110 %, vorzugsweise 60 bis 105 % der erforderlichen stöchiometrischen Menge betragen. Falls zur Herstellung des Präpolymers weniger reaktive Diisocyanate benutzt werden, kann diese Umsetzung gleichzeitig mit der Neutralisation auch in Wasser erfolgen. Ein Teil der (nicht neutralisierten) COOH-Gruppen, vorzugsweise 5 bis 30 %, kann gegebenenfalls mit difunktionellen, mit COOH-Gruppen reaktiven Verbindungen, wie Diepoxyden, umgesetzt werden.

Die Herstellung der erfindungsgemäßen Polyurethanharze kann auch so erfolgen, dass man die Komponenten A1) bis A6) in direkter Reaktion zu einem OH-funktionellen Harz umsetzt. Die Reaktionsbedingungen entsprechen dabei den für die Herstellung des NCO-Gruppen enthaltenden Prepolymers beschriebenen Bedingungen.

Zur Neutralisation des resultierenden, vorzugsweise COOH-Gruppen enthaltenden Produktes sind insbesondere tertiäre Amine geeignet, z. B. Trialkylamine mit 1 bis 12, vorzugsweise 1 bis 6 C-Atomen in jedem Alkylrest. Beispiele hierfür Trimethylamin, Triethylamin, Methyldiethylamin, Tripropylamin und Diisopropylethylamin. Die Alkylreste können beispielsweise auch Hydroxylgruppen tragen, wie bei den Dialkylnaonoalkanol-, Alkyldialkanol- und Trialkanolaminen. Beispiel hierfür ist Dimethylethanolamin, das bevorzugt als Neutralisationsmittel dient. Als Neutralisationsmittel sind gegebenenfalls auch anorganische Basen, wie Ammoniak oder Natrium- bzw. Kaliumhydroxid einsetzbar. Das Neutralisationsmittel wird zumeist im Molverhältnis zu den COOH-Gruppen des Präpolymers von ca. 0,3:1 bis 1,3:1, vorzugsweise von ca. 0,5:1 bis 1:1 eingesetzt.

Die Neutralisation der COOH-Gruppen kann vor, während oder im Anschluss an die Urethanisierungsreaktion erfolgen. Bevorzugt wird der Neutralisationsschritt im Anschluss an die Urethanisierungsreaktion durchgeführt, in der Regel zwischen Raumtemperatur und 80°C, vorzugsweise 40 bis 80°C. Sie kann dabei in beliebiger Weise durchgeführt werden, z.B. so, dass das wasserhaltige Neutralisationsmittel dem Polyurethanharz zugegeben wird oder umgekehrt. Es ist aber auch möglich, dass man zuerst das Neutralisationsmittel dem Polyurethanharz zufügt und danach erst das Wasser. Im allgemeinen erhält man so Festkörpergehalte von 20 bis 70 %, bevorzugt 30 bis 50 %.

Es kann auch eine Mischung mehrerer erfindungsgemäß geeigneter Urethangruppen enthaltender Polyole A eingesetzt werden. Der Gehalt an Polyurethanharz (100 %ig) im wässrigen Überzugmittel beträgt im allgemeinen 5 bis 60, vorzugsweise 10 bis 40 Gew.-%, bezogen auf die gesamte Zusammensetzung.

Neben dem Polyurethanharz kann die wässrige Füllerzusammensetzung als Bindemittel noch bis zu 60, vorzugsweise bis zu 30 Gew.-%, bezogen auf das Polyurethanharz, anderer oligomerer oder polymerer Materialien enthalten, wie vernetzungsfähige, wasserlösliche oder wasserdispergierbare Phenolharze, Polyesterharze, Epoxidharze oder Acrylharze etc., wie beispielsweise in EP-A 0 089 497 beschrieben.

Bei der Komponente B handelt es sich um ein mit Pyrazolderivaten der allgemeinen Formel (I) blockiertes Polyisocyanat 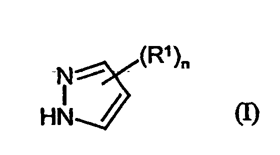 wobei R¹ für einen oder mehrere (cyclo)aliphatische Kohlenwasserstoffreste mit jeweils 1 bis 12, bevorzugt 1 bis 4 C-Atomen steht, welches keine chemisch gebundenen hydrophilen Gruppen enthält und worin n eine ganze Zahl von 0 bis 3, bevorzugt 1 oder 2 sein kann. Beispiele für solche Blockierungsmittel sind 3,5-Dimethylpyrazol oder 3-Methylpyrazol; besonders bevorzugt wird 3,5-Dimethylpyrazol eingesetzt.

Bei den der Komponente B zugrundeliegenden Polyisocyanaten, deren NCO-Gruppen mit dem Pyrazolderivat blockiert werden, handelt es sich um organische Polyisocyanate mit einer mittleren NCO-Funktionalität von mindestens 2 und einem Molekulargewicht von mindestens 140 g/mol. Gut geeignet sind vor allem (i) unmodifizierte organische Polyisocyanate des Molekulargewichtsbereichs 140 - 300 g/mol und (ii) Lackpolyisocyanate eines Molekulargewichts im Bereich von 300 - 1 000 g/mol. Urethangruppen-aufweisende NCO-Prepolymere (iii) eines über 1 000 g/mol liegenden Molekulargewichtes sind prinzipiell ebenfalls geeignet, sofern sie keine die Wasserdispergierbarkeit des Polyisocyanats bedingenden Gruppen enthalten. Selbstverständlich sind auch Gemische aus (i) bis (iii) geeignet.

Beispiele für Polyisocyanate der Gruppe (i) sind 1,4-Diisocyanatobutan, 1,6-Diisocyanatohexan (HDI), 1,5-Diisocyanato-2,2-dimethylpentan, 2,2,4- bzw. 2,4,4-Trimethyl-1,6-diisocyanatohexan, 1-Isocyanato-3,3,5-trimethyl-5-isocyanatomethyl-cyclohexan (IPDI), 1-Isocyanato-1-methyl-4-(3)-isocyanatomethyl-cyclohexan, Bis-(4-isocyanatocyclohexyl)methan, 1,10-Diisocyanatodecan, 1,12-Diisocyanatodecan, Cyclohexan-1,3- und -1,4-diisocyanat, 4-Isocyanatomethyl-1,8-octandiisocyanat (Nonantriisocyanat), Xylylendiisocyanat-Isomere, 2,4-Diisocyanatotoluol oder dessen Gemische mit 2,6-Diisocyanatotoluol mit vorzugsweise, bezogen auf Gemisch, bis zu 35 Gew.-% an 2,6-Diisocyanatotoluol, 2,2'-, 2,4'-, 4,4'-Diisocyanatodiphenylmethan oder technische Polyisocyanatgemische der Diphenylmethanreihe oder beliebige Gemische der genannten Isocyanate.

Polyisocyanate der Gruppe (ii) sind die an sich bekannten Lackpolyisocyanate. Unter dem Begriff "Lackpolyisocyanate" sind im Rahmen der Erfindung Verbindungen bzw. Gemische von Verbindungen zu verstehen, die durch an sich bekannte Oligomerisierungsreaktion von einfachen Diisocyanaten der unter (i) beispielhaft genannten Art erhalten werden. Geeignete Oligomerisierungsreaktionen sind z.B. die Carbodiimidisierung, Dimerisierung, Trimerisierung, Biuretisierung, Harnstoffbildung, Urethanisierung, Allophanatisierung und/oder Cyclisierung unter Ausbildung von Oxadiazinstrukturen. Oftmals laufen bei der "Oligomerisierung" mehrere der genannten Reaktionen gleichzeitig oder nacheinander ab. Bevorzugt handelt es sich bei den "Lackpolyisocyanaten" um a) Biuretpolyisocyanate, b) Isocyanuratgruppen-aufweisende Polyisocyanate, c) Isocyanurat- und Uretdiongruppen-aufweisende Polyisocyanatgemische, d) Urethan- und/oder Allophanatgruppen-aufweisende Polyisocyanate oder um e) Isocyanurat- und Allophanatgruppen-aufweisende Polyisocyanatgemische auf Basis einfacher Diisocyanate. Die Herstellung von derartigen Lackpolyisocyanaten ist bekannt und bespielsweise in DE-A 1 595 273, DE-A 3 700 209 und DE-A 3 900 053 oder in EP-A 0 330 966, EP-A 0 259 233, EP-A 0 377 177, EP-A 0 496 208, EP-A 0 524 501 bzw. US-A 4 385 171 beschrieben.

Die Herstellung der Komponente B aus Polyisocyanat und Pyrazolderivaten erfolgt nach in der Technik bekannten Methoden und ist z.B. in EP-A 0 159 117 beschrieben.

Es kann auch eine Mischung mehrerer erfindungsgemäß geeigneter Vernetzer B eingesetzt werden. Es auch auch möglich, einen erfindungsgemäß geeigneten Vernetzer B in Abmischung mit einem anderen Vernetzer (B2) für das Polyol A einzusetzen, wobei der Massenanteil dieses zusätzlichen Vernetzers höchstens 50% der Summe (B + B2), jeweils bezogen auf Festharz, betragen darf. Geeignete Vernetzer B2 sind z.B. von B verschiedenen blockierte Polyisocyanate, Melaminharze oder Carbamate.

Zur Herstellung der erfindungsgemässen wässrigen Überzugsmittel wird die Vernetzerkomponente B dem Urethan- und Hydroxylgruppen enthaltenden Polyolharz A vor oder während dessen Überführung in die wässrige Phase zugemischt. Bevorzugt erfolgt das Vermischen der Komponenten A und B vor der Überführung in die wässrige Phase, und die so erhaltene Mischung wird anschließend in Wasser dispergiert. Das Polyolharz A dient dann als Emulgator für den nicht hydrophil modifizierte Vernetzer B und hält diesen so stabil in der wässrigen Dispersion. Je nach Rezeptur der Polyolharzes kann sich noch ein Kettenverlängerungsschritt (mit Komponente A6) in der wässrigen Dispersion anschließen.

Die Menge an Vernetzungsmittel B wird so bemessen, dass das molare Verhältnis von blockierten NCO-Gruppen des Vernetzers zu NCO-reaktiven Gruppen des Polyurethanbindemittels bzw. der Bindemittelgemische 0,2 : 1 bis 5 : 1, bevorzugt 0,3 : 1 bis 3 : 1, besonders bevorzugt 0,4 : 1 bis 1,5 : 1 beträgt.

Die wässrige Zusammensetzung gemäß der Erfindung, deren pH-Wert zumeist etwa im Bereich von 6,0 bis 10,0, vorzugsweise 6,8 bis 8,5 liegt, kann noch die üblichen Lackadditive, wie Pigmente und Füllstoffe sowie Lackhilfsmittel, z. B. Antiabsetzmittel, Entschäumungs- und/oder Netzmittel, Verlaufmittel, Reaktiv-Verdünner, Weichmacher, Katalysatoren, Hilfslösemittel, Verdicker udgl. enthalten. Zumindest ein Teil dieser Additive kann der Zusammensetzung erst unmittelbar vor der Verarbeitung zugegeben werden; es ist aber auch möglich, zumindest einen Teil der Additive vor oder während der Dispergierung des Bindemittels bzw. Bindemittel-/ Vernetzergemischs zuzugeben. Die Auswahl und die Dosierung dieser Stoffe, die den Einzelkomponenten und/oder der Gesamtmischung zugegeben werden können, sind dem Fachmann bekannt.

Als Pigmente sind beispielsweise Eisenoxide, Bleioxide, Bleisilikate, Titandioxid, Bariumsulfat, Zinkoxid, Zinksulfid, Phthalocyaninkomplexe etc. zu nennen und als Füllstoffe Glimmer, Kaolin, Kreide, Quarzmehl, Asbestmehl, Schiefermehl, verschiedene Kieselsäuren, Silikate sowie Talkum, inklusive von sog. Mikrotalkum, mit einer Kornfeinheit von max. 10 µm (vgl. EP-A 0 249 727). Diese Pigmente und/oder Füllstoffe werden üblicherweise in Mengen von 10 bis 70, vorzugsweise von 30 bis 50 Gew.-%, bezogen auf den Gesamtfestkörpergehalt der Füllerzusammensetzung, eingesetzt.

Als Katalysatoren kommen hier die üblichen sauren Härtungskatalysatoren infrage, wie p-Toluolsulfonsäure, Dodecylbenzolsulfonsäure etc.

Die Hilfslösemittel, beispielsweise Ether, wie Dimethyl(diethyl)glykol, Dimethyl-(diethyl)-diglykol, Tetrahydrofuran, Ketone wie Methylethylketon, Aceton, Cyclohexanon, Ester, wie Butylacetat, Ethylglykolacetat, Methylglykolacetat, Methoxypropylacetat, Alkohole, wie Ethanol, Propanol, Butanol werden, wenn überhaupt, aus Gründen der Umweltfreundlichkeit nur in möglichst geringer Menge verwendet, die in der Regel 10, vorzugsweise 1 bis 5 Gew.-%, bezogen auf Wasser (als dem hauptsächlichen Verdünnungsmittel) nicht überschreitet. Die Menge an Wasser in der wässrigen Zusammensetzung liegt zumeist bei 15 bis 80 Gew.-%, vorzugsweise 30 bis 60 Gew.-%, bezogen auf die gesamte Zusammensetzung.

Die Herstellung der wässrigen Überzugmittel erfolgt nach den üblichen Methoden der Lackherstellung, wie beispielweise aus den weiter unten angegebenen Rezepturen ersichtlich.

Der Auftrag der wässrigen Überzugmittel, deren Gesamtfestkörperhalt im allgemeinen 35 bis 75, vorzugsweise 40 bis 60 Gew.-% beträgt, geschieht in bekannter Weise, beispielsweise durch Spritzen nach dem Druckluftverfahren oder mittels luftloser oder elektrostatischer Spritzverfahren. Zur Härtung der aufgebrachten Füllerschichten werden im allgemeinen Temperaturen von 100 bis 200°C, vorzugsweise 120 bis 160°C, angewendet. Die Härtungsdauer liegt im allgemeinen bei 10 bis 60 Minuten, vorzugsweise 15 bis 45 Minuten.

Die so erhaltenen vernetzten Füllerbeschichtungen zeichnen sich insbesondere durch verbesserte Steinschlagfestigkeit bei tiefen Temperaturen (0 bis -30°C) sowie durch gute Zwischenschichthaftung aus. Außerdem besitzen sie eine gute Reißdehnung sowie eine ausgezeichnete Schlagzähigkeit. Die Beständigkeit gegen Luftfeuchtigkeit und Lösungsmittel ist ebenfalls sehr gut.

Die nachfolgenden Beispiele erläutern die Erfindung, Angaben in Prozent sind - wenn nicht anders vermerkt - Gewichtsprozent (Gew.-%).

### Blockiertes Polyisocyanat B1:

1250 g Desmodur® N 3300 (Aliphatisches Polyisocyanat auf Basis Hexamethylendiisocyanat, Bayer AG), 208 g 1-Methoxypropylacetat-2 und 418 g Solventnaphtha® 100 (Shell) werden auf 50°C aufgeheizt. Unter Rühren werden 628 g 3,5-Dimethylpyrazol so zugegeben, dass die Temperatur 65°C nicht überschreitet. Anschließend wird bei 50°C so lange gerührt, bis IR-spektroskopisch kein Isocyanat mehr nachweisbar ist.

### Blockiertes Polyisocyanat B2:

998 g Desmodur® N 3300 (Aliphatisches Polyisocyanat auf Basis Hexamethylendiisocyanat, Bayer AG) und 500 g N-Methylpyrrolidon werden auf 50°C aufgeheizt. Unter Rühren werden 502 g 3,5-Dimethylpyrazol so zugegeben, dass die Temperatur 65°C nicht überschreitet. Anschließend wird bei 50°C so lange gerührt, bis IR-spektroskopisch kein Isocyanat mehr nachweisbar ist.

### Blockiertes Polyisocyanat B3:

Hierbei handelt es sich um mit Butanonoxim blockiertes hydrophiliertes Polyisocyanat auf HDI-Basis mit einem NCO-Gehalt (blockiert) von 7,2 %, 67,5 %ig gelöst in NMP (Bayhydur VP LS 2186, Bayer AG)

### Blockiertes Polyisocyanat B4:

Hierbei handelt es sich um mit 3,5-Dimethylpyrazol blockiertes hydrophiliertes Polyisocyanat auf Basis Hexamethylendiisocyanat entsprechend Bsp. 2 der WO 97/12924 mit einem NCO-Gehalt (blockiert) von 4,75 %, 40 %ig dispergiert in Wasser/NMP/Dimethyl-aminopropanol 52:6:2.

### Beispiel D1:

### Wässrige Dispersion aus Urethangruppen enthaltendem Polyol und blockiertem Polyisocyanat

266 g Desmophen® C200 (Linearer, aliphatischer Polycarbonat-Polyester, Hydroxylzahl 66 mg KOH/ g), 266 g Desmophen® VP LS 2236 (Linearer, aliphatischer Polycarbonat-Polyester, Hydroxylzahl 112 mg KOH/ g), 27 g Dimethylolpropionsäure und 214 g N-Methylpyrrolidon werden auf 70°C aufgeheizt und gerührt, bis sich eine klare Lösung gebildet hat. Anschließend werden 185 g 4,4'-Diisocyanatodicyclohexylmethan zugegeben. Eine exotherme Reaktion setzt ein. Der Ansatz wird so lange bei 100°C gehalten, bis der NCO-Gehalt 1,9 Gew.-% beträgt.

Anschließend wird auf 70°C abgekühlt und 21 g Triethylamin, 255 g des blockierten Polyisocyanats aus Beispiel B 1 sowie 18 g des Umsetzungsproduktes aus 1 mol Nonylphenol und 20 mol Ethylenoxid zugegeben und durch 10-minütiges Rühren homogenisiert. Dann werden 900 g der so hergestellten Harzlösung unter Rühren in 930 g 23°C warmem Wasser unter Rühren dispergiert. Es wird noch weitere 5 min gerührt, dann wird eine Lösung von 31 g Diethanolamin in 103 g Wasser innerhalb von 5 min zugegeben. Die Dispersion wird bei Raumtemperatur gerührt, bis kein Isocyanat mehr nachzuweisen ist (IR-Spektroskopie).

Das Produkt ist eine Polyurethan-Dispersion mit einer mittleren Teilchengröße von 60 nm (bestimmt durch Laserkorrelationsspektroskopie).

### Beispiel D2:

### Wässrige Dispersion aus Urethangruppen enthaltendem Polyol und blockiertem Polyisocyanat

Beispiel D1 wird wiederholt mit dem Unterschied, dass 255 g des blockierten Polyisocyanats B2 anstelle von Polyisocyanat B 1 zugegeben werden. Die erhaltenen Polyurethan-Dispersion hat eine mittleren Teilchengröße von 38 nm (bestimmt durch Laserkorrelationsspektroskopie).

### Beispiel D3 (nicht erfindungsgemäß):

### Wässrige Dispersion aus Urethangruppen enthaltendem Polyol und blockiertem Polyisocyanat

266 g Desmophen® C200 (Linearer, aliphatischer Polycarbonat-Polyester, Hydroxylzahl 66 mg KOH/ g), 266 g Desmophen® VP LS 2236 (Linearer, aliphatischer Polycarbonat-Polyester, Hydroxylzahl 112 mg KOH/ g), 27 g Dimethylolpropionsäure und 214 g N-Methylpyrrolidon werden auf 70°C aufgeheizt und gerührt, bis sich eine klare Lösung gebildet hat. Anschließend werden 185 g 4,4'-Diisocyanatodicyclohexylmethan zugegeben. Eine exotherme Reaktion setzt ein. Der Ansatz wird so lange bei 100°C gehalten, bis der NCO-Gehalt 1,9 Gew.-% beträgt.

Anschließened wird auf 70°C abgekühlt und 21 g Triethylamin sowie 18 g des Umsetzungsproduktes aus 1 mol Nonylphenol und 20 mol Ethylenoxid zugegeben und durch 10-minütiges Rühren homogenisiert. Dann werden 700 g der so hergestellten Harzlösung unter Rühren in 723 g 23°C warmem Wasser unter Rühren dispergiert. Es wird noch weitere 5 min gerührt, dann wird eine Lösung von 24 g Diethanolamin in 80 g Wasser innerhalb von 5 min zugegeben. Die Dispersion wird bei Raumtemperatur gerührt, bis kein Isocyanat mehr nachzuweisen ist (IR-Spektroskopie).

Das Produkt ist eine Polyurethan-Dispersion mit einer mittleren Teilchengröße von 23 nm (bestimmt durch Laserkorrelationsspektroskopie) und einem Festgehalt von 35,8 %.

Zu 929 g dieser Dispersion gibt man unter Rühren bei Raumtemperatur 202 g des hydrophilierten blockierten Polyisocyanats B4. Man erhält eine Dispersion mit einer mittl. Teilchengröße von 24 nm.

### Beispiel D4:

### Wässrige Dispersion aus Urethangruppen enthaltendem Polyol und blockiertem Polyisocyanat

192 g eines Polyesters aus Adipinsäure und Hexandiol (OH-Zahl 69 mg KOH/ g), 21 g Dimethylolpropionsäure, 41 g 1,6-Hexandiol und 214 g N-Methylpyrrolidon werden auf 70°C aufgeheizt und gerührt, bis sich eine klare Lösung gebildet hat. Anschließend werden 196 g Isophorondiisocyanat zugegeben. Eine exotherme Reaktion setzt ein. Der Ansatz wird 1 h bei 80°C gehalten, dann wird auf 100°C aufgeheizt und so lange bei 100°C gehalten, bis der NCO-Gehalt 4,0 Gew.-% beträgt.

Anschließend wird auf 70°C abgekühlt und 16 g Triethylamin, 323 g des blockierten Polyisocyanats aus Beispiel B 1 sowie 15 g des Umsetzungsproduktes aus 1 mol Nonylphenol und 20 mol Ethylenoxid zugegeben und durch 10-minütiges Rühren homogenisiert. Dann werden 700 g der so hergestellten Harzlösung unter Rühren in 853 g 35°C warmem Wasser unter Rühren dispergiert. Es wird noch weitere 5 min gerührt, dann wird eine Lösung von 38 g Diethanolamin in 195 g Wasser innerhalb von 5 min zugegeben. Die Dispersion wird bei Raumtemperatur gerührt, bis kein Isocyanat mehr nachzuweisen ist (IR-Spektroskopie).

Das Produkt ist eine Polyurethan-Dispersion mit einer mittleren Teilchengröße von 54 nm (bestimmt durch Laserkorrelationsspektroskopie).

### Beispiel D5:

### Wässrige Dispersion aus Urethangruppen enthaltendem Polyol und blockiertem Polyisocyanat

In einem 41-Reaktionsgefäß mit Kühl-, Heiz- und Rührvorrichtung werden 2156 g eines Polyesters mit einer OH-Gehalt von 5,2 % und einer Säurezahl von 2 mg KOH/g, bestehend aus 30,7 % Hexandiol-1,6, 17,0 % Trimethylolpropan, 6,1 % Sojaölfettsäure, 24,6 % Isophthalsäure und 21,6 % Adipinsäure vorgelegt und zusammen mit 188 g Dimethylolpropionsäure, 48 g Trimethylolpropan, 448 g N-Methylpyrrolidon und 7,5 g Zinnoctoat auf 130°C aufgeheizt und 30 min homogenisiert. Anschließend kühlt man auf 80°C und gibt 609 g 1-Isocyanato-3,3,5-trimethyl-5-isocyanatomethylcyclohexan (IPDI) unter kräftigen Rühren zu, heizt (unter Ausnutzung der Exothermie der Reaktion) auf 130°C auf und hält das Gemisch solange bei dieser Temperatur, bis sich keine NCO-Gruppen mehr feststellen lassen.

Die Harzschmelze hat dann eine Viskosität, bestimmt als Auslaufzeit einer 40 %igen xylolischen Lösung im DIN 4-Becher bei 23°C von 66 Sekunden.

Zu 1000 g dieser Harzschmelze gibt man dann bei 75°C 307 g des blockierten Polyisocyanats B1 zu, homogenisiert 20 min bei dieser Temperatur und gibt 25,3 g Dimethylethanolamin zu. Man rührt wiederum 10 min bei 75°C und gibt dann 1050 g dest. Wasser langsam zu. Die erhaltene Dispersion hat einen Festkörpergehalt von 44,4 %, einen Colösergehalt von 8,3 %, eine Viskosität von 1260 mPas und eine mittl. Teilchengröße von 60 nm. Die Säurezahl beträgt 23,4 mg KOH/g, der OH-Gehalt 2,4 % (jeweils bezogen auf 100 % Festkörpergehalt).

### Beispiel D6:

### Wässrige Dispersion aus Urethangruppen enthaltendem Polyol und blockiertem Polyisocyanat

Zu 1000 g der Harzschmelze aus Beispiel D5 gibt man bei 75°C 614 g des blockierten Polyisocyanats B1, homogenisiert 20 min bei dieser Temperatur und gibt 25,3 g Dimethylethanolamin zu. Man rührt wiederum 10 min bei 75°C und gibt dann 1200 g dest. Wasser langsam zu. Die erhaltene Dispersion hat einen Festkörpergehalt von 45,7 %, einen Colösergehalt von 9,8 %, eine Viskosität von 800 mPas und eine mittl. Teilchengröße von 90 nm. Die Säurezahl beträgt 20 mg KOH/g, der OH-Gehalt 2,0 % (jeweils bezogen auf 100 % Festkörpergehalt).

### Beispiel D7:

### Wässrige Dispersion aus Urethangruppen enthaltendem Polyol und blockiertem Polyisocyanat

In einem 41-Reaktionsgefäß mit Kühl-, Heiz- und Rührvorrichtung werden 1119 g eines Polyesters mit einer OH-Gehalt von 3,3 % und einer Säurezahl von 3 mg KOH/g, bestehend aus 39,7 % Neopentylglykol, 6,4 % Trimethylolpropan, 43,5 % Tetrahydrophthalsäureanhydrid und 10,4 % Adipinsäure sowie 1119 g eines Polyesters aus 30,4 % Hexandiol-1,6, 16,9 % Neopentylglkol und 52,7 % Adipinsäure (OH-Gehalt 2,0 %, Säurezahl ca. 1 mg KOH/g) vorgelegt und zusammen mit 150 g Dimethylolpropionsäure, 138 g Trimethylolpropan, 333 g N-Methylpyrrolidon und 3,8 g Zinnoctoat auf 130°C aufgeheizt und 30 min homogenisiert. Anschließend kühlt man auf 90°C und gibt 474 g 1-Isocyanato-3,3,5-trimethyl-5-isocyanatomethylcyclohexan (IPDI) unter kräftigen Rühren zu, heizt (unter Ausnutzung der Exothermie der Reaktion) auf 130°C auf und hält das Gemisch solange bei dieser Temperatur, bis sich keine NCO-Gruppen mehr feststellen lassen.

Die Harzschmelze hat dann eine Viskosität, bestimmt als Auslaufzeit einer 50 %igen Lösung in Methoxypropylacetat im DIN4-Becher bei 23°C von 55 Sekunden.

Zu 1000 g dieser Harzschmelze gibt man dann bei 70°C 286 g des blockierten Polyisocyanats B1 zu, homogenisiert 30 min bei dieser Temperatur und gibt 29,9 g Dimethylethanolamin zu. Man rührt wiederum 15 min bei 70°C und gibt dann 950 g dest. Wasser langsam zu.

Die erhaltene Dispersion hat einen Festkörpergehalt von 48,3 %, einen Colösergehalt von 7,4 %, eine Viskosität von 1340 mPas und eine mittl. Teilchengröße von 62 nm. Die Säurezahl beträgt 20 mg KOH/g, der OH-Gehalt 2,2 % (jeweils bezogen auf 100 % Festkörpergehalt).

### Beispiel D8:

### Wässrige Dispersion aus Urethangruppen enthaltendem Polyol und blockiertem Polyisocyanat

Zu 1000 g der Harzschmelze aus Beispiel D7 gibt man bei 70°C 571 g des blockierten Polyisocyanats B1, homogenisiert 30 min bei dieser Temperatur und gibt 29,9 g Dimethylethanolamin zu. Man rührt wiederum 15 min bei 70°C und gibt dann 1085 g dest. Wasser langsam zu.

Die erhaltene Dispersion hat einen Festkörpergehalt von 48,2 %, einen Colösergehalt von 8,8 %, eine Viskosität von 730 mPas und eine mittl. Teilchengröße von 90 nm. Die Säurezahl beträgt 17 mg KOH/g, der OH-Gehalt 1,8 % (jeweils bezogen auf 100 % Festkörpergehalt).

### Beispiel D9:

### Wässrige Dispersion aus Urethangruppen enthaltendem Polyol und blockiertem Polyisocyanat

In einem 41-Reaktionsgefäß mit Kühl-, Heiz- und Rührvorrichtung werden 2478 g eines Polyesters mit einer OH-Gehalt von 5,4 % und einer Säurezahl von 3 mg KOH / g, bestehend aus 2,0 % Propylenglykol, 35,0 % Neopentylglykol, 10,4 % Trimethylolpropan, 30,0 % Isophthalsäure und 22,6 % Adipinsäure vorgelegt und zusammen mit 150 g Dimethylolpropionsäure, 125 g N-Methylpyrrolidon und 3,8 g Zinnoctoat auf 130°C aufgeheizt und 30 min homogenisiert. Anschließend kühlt man auf 100°C und gibt 372 g Hexamethylendiisocyanat (HDI) unter kräftigen Rühren zu, heizt (unter Ausnutzung der Exothermie der Reaktion) auf 130°C auf und hält das Gemisch solange bei dieser Temperatur, bis sich keine NCO-Gruppen mehr feststellen lassen.

Die Harzschmelze hat dann eine Viskosität, bestimmt als Auslaufzeit einer 50 %igen xylolischen Lösung im DIN4-Becher bei 23°C von 121 Sekunden.

Zu 900 g dieser Harzschmelze gibt man dann bei 65°C 336 g des blockierten Polyisocyanats B1 zu, homogenisiert 20 min bei dieser Temperatur und gibt 28,7 g Dimethylethanolamin zu. Man rührt wiederum 10 min bei 65°C und gibt dann 1230 g dest. Wasser langsam zu.

Die erhaltene Dispersion hat einen Festkörpergehalt von 43,8 %, einen Colösergehalt von 4,7 %, eine Viskosität von 840 mPas und eine mittl. Teilchengröße von 80 nm. Die Säurezahl beträgt 19,6 mg KOH/g, der OH-Gehalt 2,6 % (jeweils bezogen auf 100 % Festkörpergehalt).

### Beispiel D10:

### Wässrige Dispersion aus Urethangruppen enthaltendem Polyol und blockiertem Polyisocyanat

Zu 900 g der Harzschmelze aus Beispiel D9 gibt man bei 65°C 672 g des blockierten Polyisocyanats B1, homogenisiert 20 min bei dieser Temperatur und gibt 28,7 g Dimethylethanolamin zu. Man rührt wiederum 10 min bei 65°C und gibt dann 1250 g dest. Wasser langsam zu.

Die erhaltene Dispersion hat einen Festkörpergehalt von 46,5 %, einen Colösergehalt von 6,9 %, eine Viskosität von 1000 mPas und eine mittl. Teilchengröße von 150 nm. Die Säurezahl beträgt 16 mg KOH/g, der OH-Gehalt 2,1 % (jeweils bezogen auf 100 % Festkörpergehalt).

### Beispiel D11 (nicht erfindungsgemäß):

### Wässrige Dispersion aus Urethangruppen enthaltendem Polyol

In einem 41-Reaktionsgefäß mit Kühl-, Heiz- und Rührvorrichtung werden 2156 g eines Polyesters mit einer OH-Gehalt von 5,2 % und einer Säurezahl von 2 mg KOH / g, bestehend aus 30,7 % Hexandiol-1,6, 17,0 % Trimethylolpropan, 6,1 % Sojaölfettsäure, 24,6 % Isophthalsäure und 21,6 % Adipinsäure vorgelegt und zusammen mit 188 g Dimethylolpropionsäure, 48 g Trimethylolpropan, 448 g N-Methylpyrrolidon und 7,5 g Zinnoctoat auf 130°C aufgeheizt und 30 min homogenisiert. Anschließend kühlt man auf 80°C und gibt 609 g 1-Isocyanato-3,3,5-trimethyl-5-isocyanatomethylcyclohexan (IPDI) unter kräftigen Rühren zu, heizt (unter Ausnutzung der Exothermie der Reaktion) auf 130°C auf und hält das Gemisch solange bei dieser Temperatur, bis sich keine NCO-Gruppen mehr feststellen lassen.

Die Harzschmelze hat dann eine Viskosität, bestimmt als Auslaufzeit einer 40 %igen xylolischen Lösung im DIN4-Becher bei 23°C von 66 Sekunden.

Zu 1000 g dieser Harzschmelze gibt man dann bei 90°C 25,3 g Dimethylethanolamin. Man rührt 10 min bei 90°C und gibt dann 850 g dest. Wasser langsam zu. Die erhaltene Dispersion hat einen Festkörpergehalt von 46,6 %, einen Colösergehalt von 7,0 %, eine Viskosität von 1900 mPas und eine mittl. Teilchengröße von 42 nm. Die Säurezahl beträgt 28 mg KOH/g, der OH-Gehalt 3,0 % (jeweils bezogen auf 100 % Festkörpergehalt).

### Beispiel D12 (nicht erfindungsgemäß):

### Wässrige Dispersion aus Urethangruppen enthaltendem Polyol und blockiertem Polyisocyanat B4

In einem 41-Reaktionsgefäß mit Kühl-, Heiz- und Rührvorrichtung werden 2478 g eines Polyesters mit einer OH-Gehalt von 5,4 % und einer Säurezahl von 3 mg KOH / g, bestehend aus 2,0 % Propylenglykol, 35,0 % Neopentylglykol, 10,4 % Trimethylolpropan, 30,0 % Isophthalsäure und 22,6 % Adipinsäure vorgelegt und zusammen mit 150 g Dimethylolpropionsäure, 125 g N-Methylpyrrolidon und 3,8 g Zinnoctoat auf 130°C aufgeheizt und 30 min homogenisiert. Anschließend kühlt man auf 100°C und gibt 372 g Hexamethylendiisocyanat (HDI) unter kräftigen Rühren zu, heizt (unter Ausnutzung der Exothermie der Reaktion) auf 130°C auf und hält das Gemisch solange bei dieser Temperatur, bis sich keine NCO-Gruppen mehr feststellen lassen. Die Harzschmelze hat dann eine Viskosität, bestimmt als Auslaufzeit einer 50 %igen xylolischen Lösung im DIN4-Becher bei 23°C von 121 Sekunden.

Zu 900 g dieser Harzschmelze gibt man dann bei 80°C 28,7 g Dimethylethanolamin. Man rührt 15 min bei 80°C und gibt dann 828 g dest. Wasser langsam zu. Die erhaltene Dispersion hat einen Festkörpergehalt von 45,0 %, einen Colösergehalt von 1,9 %, eine Viskosität von 1630 mPas und eine mittl. Teilchengröße von 32 nm. Die Säurezahl beträgt 22 mg KOH/g, der OH-Gehalt 3,3 % (jeweils bezogen auf 100 % Festkörpergehalt).

Zu 800 g dieser Dispersion gibt man unter Rühren bei Raumtemperatur 319 g des hydrophilierten blockierten Polyisocyanats B4. Man erhält eine Dispersion mit einer mittl. Teilchengröße von 27 nm.

### Beispiel A1: Prüfung der Vernetzer-enthaltenden Dispersionen auf Lagerstabilität

**(Tabelle 1)**

| **Dispersion** | **D9** | **D10** | **D12** nicht erfindungsgemäß |
|---|---|---|---|
| NCO (block.) : OH | 0,5 : 1 | 1 : 1 | 0,5 : 1 |

| ***Ausgangswerte:*** | | | |
|---|---|---|---|
| Viskosität [D = 40 s⁻¹, 23°C] | 1000 mPas | 840 mPas | 480 mPas |
| mittl. Teilchengröße | 52 nm | 149 nm | 26 nm |
| pH-Wert | 7,8 | 7,8 | 8,1 |

| ***nach 4 Wochen 40°C:*** | | | |
|---|---|---|---|
| Viskosität [D = 40 s⁻¹, 23°C] | 930 mPas | 560 mPas | 70 mPas Druckaufbau |
| mittl. Teilchengröße | 48 mn | 140 nm | 36 nm |
| pH-Wert | 7,5 | 7,4 | 7,5 |

| ***nach 4 Wochen 50°C:*** | | | |
|---|---|---|---|
| Viskosität [D = 40 s⁻¹, 23°C] | 640 mPas | 390 mPas | < 20 mPas Druckaufbau Bodensatz-Bildung |
| mittl. Teilchengröße | 60 nm | 160 nm | 90 nm |
| pH-Wert | 7,3 | 7,2 | 7,1 |

Alle 3 Vernetzer-enthaltenden Dispersionen in Tabelle 1 enthalten die gleiche Urethangruppen-enthaltende Polyol-Dispersion. Man erkennt, dass die erfindungsgemäßen selbstvemetzenden Dispersionen D9 und D10 ausreichend lagerstabil sind, selbst bei doppeltem Vernetzergehalt (D10), während bei der nicht erfindungsgemäßen Dispersionen D12 die Viskosität bei Lagerung schnell fällt, die Dispersion grobteiliger wird und eine Gasentwicklung (Druckaufbau) festzustellen ist. Nach 4 Wochen Lagerung bei 50°C beginnt bei D12 auch die Bildung eines Bodensatzes.

### Beispiel A2:

### Anwendung der selbstvernetzenden Harzdispersionen als Klarlacke (erfindungsgemäß)

196,5 Gew. Teile der Dispersionen entsprechend Bsp. D1 - D10 werden mit 3,5 Gew.Teilen eines handelsüblichen Verlaufsmittels (Additol® XW 395, Vianova Resins) zu einem wässrigen Klarlack formuliert, auf Glasplatten appliziert (Nassfilmstärke 120 µm), 10 min bei Raumtemperatur abgelüftet und anschließend 30 min bei 140° bzw. 160°C eingebrannt. Tabelle 2 zeigt die Ergebnisse der lacktechnischen Prüfungen.

### Beispiel A3 :

### Vergleichsbeispiel zu A2); nicht erfindunsgemäß

158,5 Gew. Teile der Dispersionen entsprechend Bsp. D11 werden mit 38 Gew.Teilen Polyisocyanat B3, 3,5 Gew.Teilen eines handelsüblichen Verlaufsmittels (Additol XW 395, Vianova Resins) und 57 Gew.Teilen dest. Wasser zu einem wässrigen Klarlack formuliert, auf eine Glasplatte appliziert (Nassfilmstärke 120 µm), 10 min bei Raumtemperatur abgelüftet und anschließend 30 min bei 140° bzw. 160°C eingebrannt. Tabelle 2 zeigt die Ergebnisse der lacktechnischen Prüfungen.

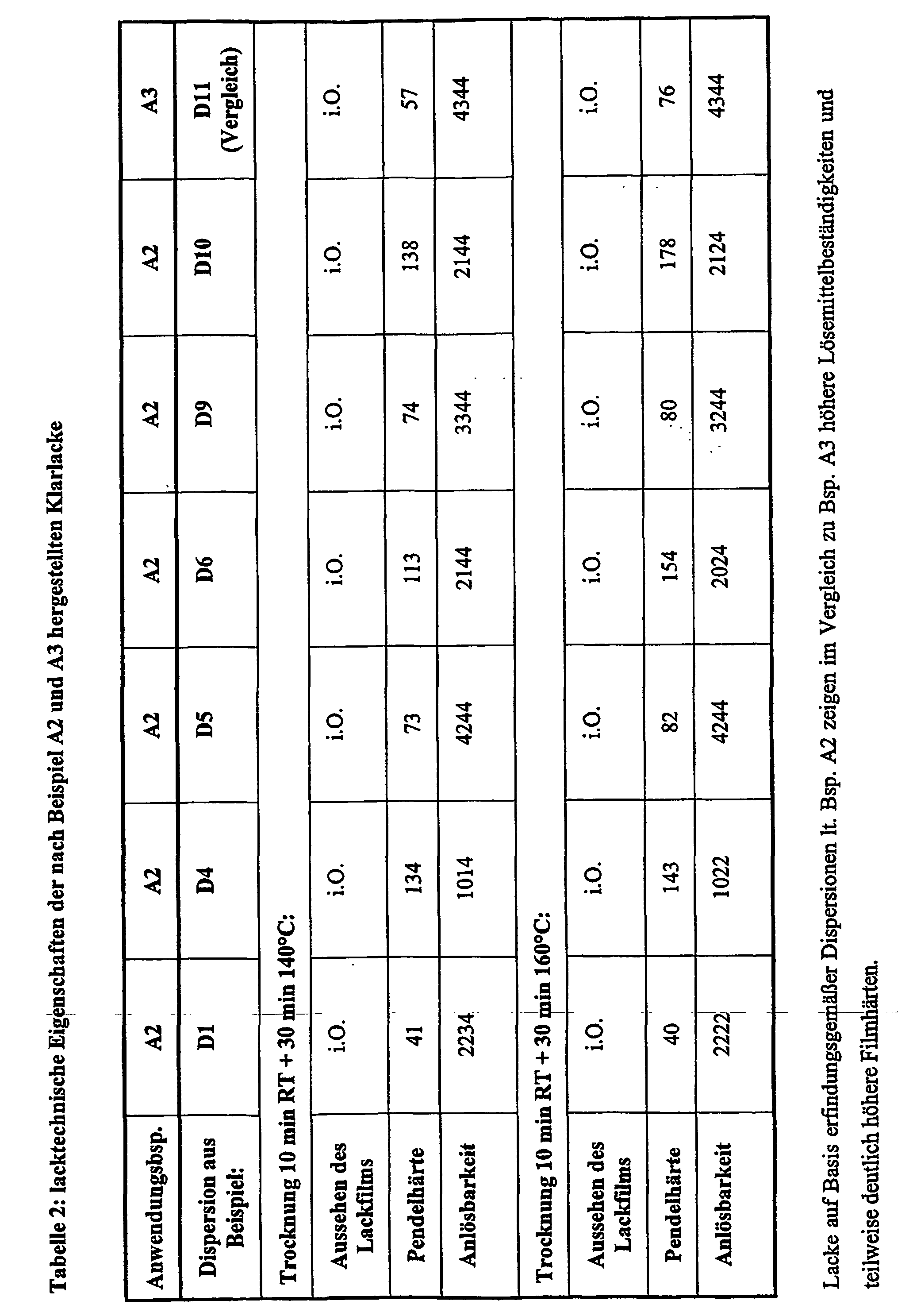

### Beispiel A4:

### Anwendung der selbstvernetzenden Harzdispersionen als wässrige Einbrennfüller (erfindungsgemäß)

### a) Herstellung einer Pigmentpaste P:

Eine vordispergierte Aufschlämmung, bestehend aus 10,8 g 70%-iges wasserverdünnbares Polyester-Harz (Bayhydrol® D 270, Bayer AG), 21,1 g dest. Wasser, 1,5 g 10 %-iges Dimethylethanolamin in Wasser sowie 2,8 g handelsübliche Benetzungsmittel, 27,7 g Titandioxid (Tronox® R-FD-I, Kerr McGee Pigments GmbH & Co. KG), 0,3 g Eisenoxidschwarz (Bayferrox® 303 T), 27,9 g Bariumsulfat (Blanc fixe Micro, Sachtleben GmbH), 6,8 g Talkum (Micro Talc IT Extra, Norwegian Talc) und 1,0 g Antiabsetzmittel (Aerosil® R 972, Degussa), wird 30 Minuten in einer handelsüblichen Perlmühle unter Kühlung zu einer Paste vermahlen.

### b) Herstellung eines wässrigen Einbrennfüllers:

32 Gew.Teile der Dispersionen entsprechend Bsp. D5, D6, D9, D10 werden mit 40 Gew.Teilen der oben beschriebenen Pigmentpaste P, 6 Gew.Teilen einer handelsüblichen Polyesterdispersion (Bayhydrol® D 270, Bayer AG), 3,4 Gew. Teilen eines handelsüblichen Melaminharzes (Maprenal® MF 904, Vianova Resins) angerieben und mit 9 - 16 Gew.Teilen dest. Wasser sowie 0 - 2 Gew.Teilen einer 10 %igen wässrigen Lösung von Dimethylethanolamin auf einen pH-Wert von 8,5 ± 0,5 und eine Auslaufzeit bei 23°C im DIN5-Becher von 35 ± 5 Sekunden eingestellt.

Diese Lacke werden mittels Fließbecher-Spritzpistole mit einer Düse Durchmesser /1,5 mm und einem Zerstäuberdruck von 5 bar auf die nachstehenden Substrate in einer resultierenden Trockenfilmstärke von 25-35 µm aufgetragen. Die resultierenden Nasslackfilme bei Raumtemperatur abgelüftet und anschließend in einem Umluftofen 25 min bei 165°C eingebrannt. Die Substrate sind im Fall der Prüfungen von Pendelhärte, Anlösbarkeit und Glanz Glasplatten, im Fall Erichsen-Tiefung entfettete Stahlbleche sowie bei den Steinschlagprüfungen KTL-beschichtete Stahlbleche, die in der Automobil-Produktion verwendet werden. Tabelle 3 zeigt die Ergebnisse der lacktechnischen Prüfungen.

Ein Teil der mit Füller beschichteten und eingebrannten Platten wird anschließend mit einem handelsüblichen 1K-Acrylat/Melamin-Decklack "Flashrot" der Fa. DuPont/Herberts lackiert und 30 min bei 130°C eingebrannt. Die lacktechnischen Prüfergebnisse sind ebenfalls in Tabelle 3 festgehalten.

### Beispiel A5:

### Vergleichsbeispiel zu A4); nicht erfindungsgemäß

23 Gew.Teile der Dispersionen entsprechend Bsp. D11 werden mit 40 Gew. Teilen der Pigmentpaste P1, 6 Gew.Teilen einer handelsüblichen Polyesterdispersion (Bayhydrol® D 270, Bayer AG), 3,4 Gew. Teilen eines handelsüblichen Melaminharzes (Maprenal® MF 904, Vianova Resins) und 5,5 Gew.Teilen Polyisocyanat B3 angerieben und mit 16 Gew.Teilen dest. Wasser sowie 0,5 Gew.Teilen einer 10 %igen wässrigen Lösung von Dimethylethanolamin auf einen pH-Wert von 8,5 ± 0,5 und eine Auslaufzeit bei 23°C im DIN5-Becher von 35 ± 5 Sekunden eingestellt.

Der Füller wird mit einer Nassfilmstärke von 120 µm auf verschiedene Untergründe appliziert, 10 min bei RT abgelüftet und dann 25 min bei 165°C eingebrannt. Tabelle 3 zeigt die Ergebnisse der lacktechnischen Prüfungen.

Weitere mit diesem Füller beschichtete und eingebrannte Platten werden anschließend mit einem handelsüblichen 1K-Acrylat/Melamin-Decklack "Flashrot" der Fa. DuPont/Herberts lackiert und 30 min bei 130°C eingebrannt. Die lacktechnischen Prüfergebnisse sind ebenfalls in Tabelle 3 festgehalten.

### Beispiel A6:

### Vergleichsbeispiel zu A4); nicht erfindunsgemäß

Bsp. A 5 wird wiederholt mit dem Unterschied, dass Polyoldispersion und blockierter Vernetzer entsprechend Bsp. D12 verwendet werden: 23,6 Gew.Teile der wässrigen Polyol-Dispersionen entsprechend Bsp. D12 (ohne Vernetzer) und 10,8 Gew. Teile Polyisocyanat B4 werden mit 42,4 Gew. Teilen der Pigmentpaste P1, 6,5 Gew.Teilen einer handelsüblichen Polyesterdispersion (Bayhydrol® D 270, Bayer AG), 3,6 Gew. Teilen eines handelsüblichen Melaminharzes (Maprenal® MF 904, Vianova Resins) angerieben und mit 13,6 Gew.Teilen dest. Wasser auf einen pH-Wert von 8,3 und eine Auslaufzeit bei 23°C im DIN5-Becher von 38 Sekunden eingestellt.

Der Füller wird appliziert und geprüft wie in Bsp. A5. Tabelle 3 zeigt die Ergebnisse der lacktechnischen Prüfungen.

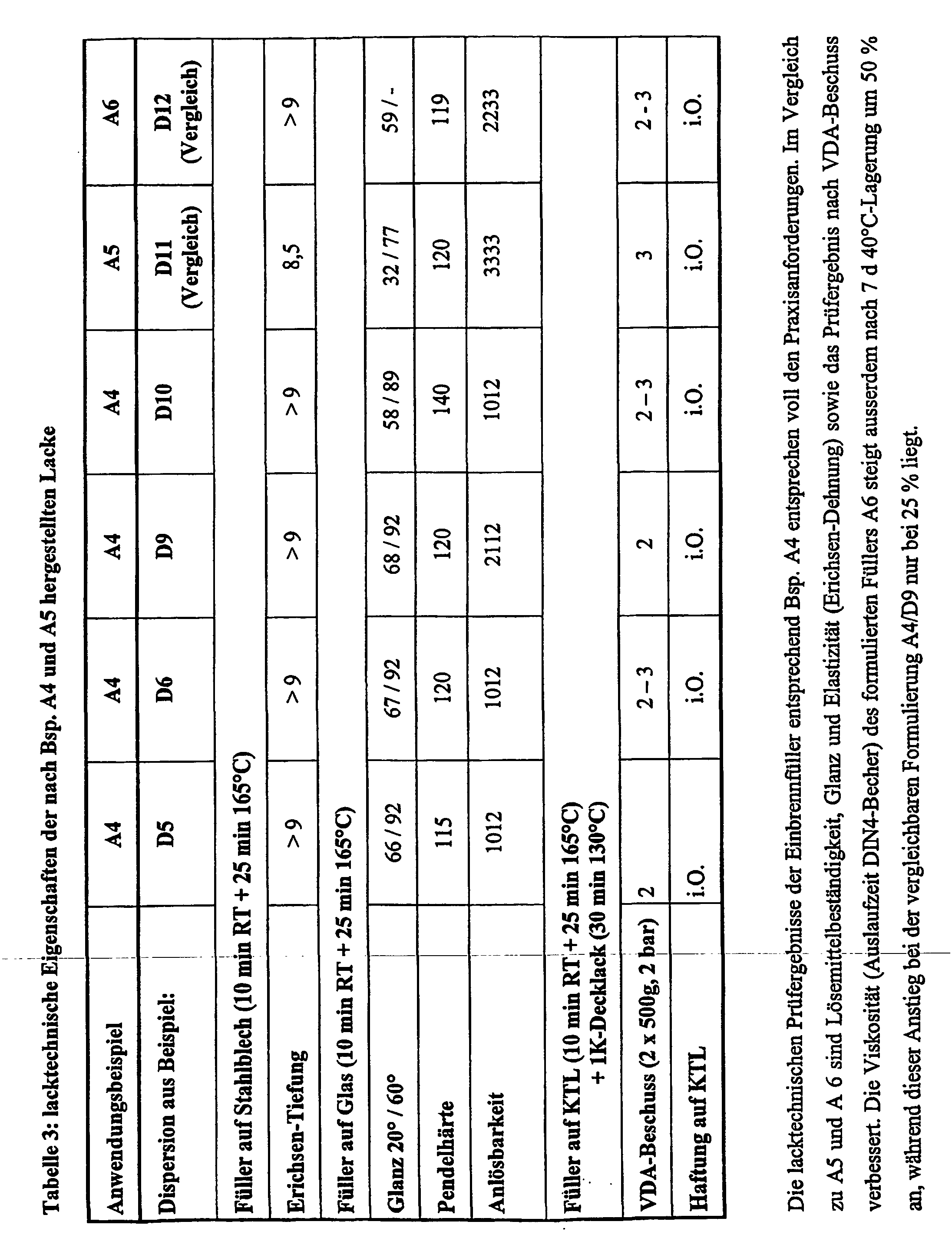

### Erläuterung zu den durchgeführten Prüfungen:

Pendelhärte: Schwingungsversuch nach König DIN 53 157 (s)
Glanzmessung 60°: nach DIN EN ISO 2813 (%)
Erichsentiefung: nach DIN EN ISO 1520 (mm)
Anlösbarkeit von Lackfilmen: 1 Minute Kontakt mit den Lösemitteln Toluol / 1-Methoxypropylacetat-2 / Ethylacetat / Aceton bei 23°C. Beurteilungsindex : je Lösemittel 0-5, Beispiel: 0000 = keine Veränderung, 0005 = zerstört bei Aceton.
Steinschlagtest VDA: in Anlehnung an VW-Spezifikation mit 2mal 500 g Stahlschrot bei 1,5 Bar Luftdruck beschossen. Index 1 - 10 (1 = keine Durchschüsse, 10 = sehr große und viele Abplatzungen vom Blech)

## Patentansprüche

1. Wässrige Beschichtungsmittel, enthaltend eine in Wasser und gegebenenfalls organischen Lösemitteln dispergiert vorliegende physikalischen Mischung aus
A mindestens einem Urethangruppen und Hydroxygruppen enthaltenden Polyol, welches chemisch gebundene hydrophile Gruppen enthält und
B mindestens einem mit Pyrazolderivaten der allgemeinen Formel (I) 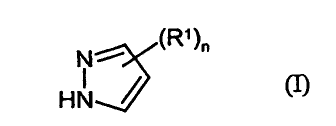 blockierten Polyisocyanat,
wobei R¹ für einen oder mehrere (cyclo)aliphatische Kohlenwasserstoffreste mit jeweils 1 bis 12, bevorzugt 1 bis 4 C-Atomen steht, welche keine chemisch gebundenen hydrophilen Gruppen enthält, und worin n eine ganze Zahl von 0 bis 3 sein kann,
wobei das Mengenverhältnis der Komponenten A und B so bemessen ist, dass das molare Verhältnis von blockierten NCO-Gruppen des Vernetzers B zu NCO-reaktiven Gruppen des Polyols A bzw. Polyol A enthaltender Bindemittelgemische 0,2 : 1 bis 5 : 1 beträgt.

2. Wässrige Beschichtungsmittel gemäß Anspruch 1, **dadurch gekennzeichnet, dass** das Urethangruppen enthaltende Polyol A ein mittleres Molekulargewicht Mₙ (aus der Stöchiometrie des Ausgangsmaterials berechnet) von 1 600 bis 50 000, eine Säurezahl von 10 bis 80 und eine Hydroxylzahl von 16,5 bis 200 aufweist.

3. Wässrige Beschichtungsmittel gemäß Anspruch 1,**dadurch gekennzeichnet, dass** das Urethangruppen enthaltende Polyol A ein mittleres Molekulargewicht M n (aus der Stöchiometrie des Ausgangsmaterials berechnet) von 1600 bis 10000, eine Säurezahl von 15 - 40 und eine Hydroxylzahl von 30 bis 130 aufweist.

4. Wässrige Beschichtungsmittel gemäß einem der Ansprüche 1 bis 3, **dadurch gekennzeichnet, dass** das Urethangruppen enthaltende Polyol A hergestellt wird aus
A1 5 - 80 % organischen Polyisocyanaten
A2 10 - 80 % Polyolen und/oder Polyaminen mit einem mittleren Molgewicht Mn von mindestens 400,
A3 2 - 15 % Verbindungen, die mindestens zwei gegenüber Isocyanatgruppen reaktive Gruppen und mindestens eine zur Anionenbildung befähigte Gruppe aufweisen,
A4 0 - 20 % Polyolen des Molekulargewichts Mn von 62 bis 400
A5 0 - 20 % Verbindungen, die monofunktionell sind oder aktiven Wasserstoff unterschiedlicher Reaktivität enthalten, wobei sich diese Bausteine jeweils am Kettenende des Urethangruppen enthaltenden Polymers befinden und/ oder
A6 0 - 20 % Verbindungen, die von A2, A3, A4 und A5 verschieden sind und mindestens zwei, mit NCO-Gruppen reaktive Gruppen enthalten.

5. Wässrige Beschichtungsmittel gemäß einem der Ansprüche 1 bis 3, **dadurch gekennzeichnet, dass** das Urethangruppen enthaltende Polyol A hergestellt wird aus
A1 10 - 60 % organischen Polyisocyanaten
A2 36 - 70 % Polyolen und/oder Polyaminen mit einem mittleren Molgewicht Mn von mindestens 400,
A3 3 - 10 % Verbindungen, die mindestens zwei gegenüber Isocyanatgruppen reaktive Gruppen und mindestens eine zur Anionenbildung befähigte Gruppe aufweisen,
A4 1 - 10 % Polyolen des Molekulargewichts Mn von 62 bis 400
A5 0 - 20 % Verbindungen, die monofunktionell sind oder aktiven Wasserstoff unterschiedlicher Reaktivität enthalten, wobei sich diese Bausteine jeweils am Kettenende des Urethangruppen enthaltenden Polymers befinden und/ oder
A6 0 - 20 % Verbindungen, die von A2, A3, A4 und A5 verschieden sind und mindestens zwei, mit NCO-Gruppen reaktive Gruppen enthalten.

6. Wässrige Beschichtungsmittel gemäß einem der Ansprüche 1 bis 4, **dadurch gekennzeichnet, dass** in Komponente B als Blockierungsmittel für die Isocyanatgruppen 3,5-Dimethylpyrazol oder 3-Methylpyrazol eingesetzt werden.

7. Verfahren zur Herstellung von wässrigen Überzugsmitteln gemäß einem der Ansprüche Anspruch 1 bis 6, **dadurch gekennzeichnet dass** die Vernetzerkomponente B dem Urethan- und Hydroxylgruppen enthaltenden Polyolharz A vor oder während dessen Überführung in die wässrige Phase zugemischt wird.

8. Verfahren zur Herstellung von wässrigen Überzugsmitteln gemäß einem der Ansprüche 1 bis 6, **dadurch gekennzeichnet dass** die Vernetzerkomponente B dem Urethan- und Hydroxylgruppen enthaltenden Polyolharz A vor der Überführung in die wässrige Phase zugemischt und die so erhaltene Mischung anschließend in Wasser dispergiert wird.

9. Verwendung der wässrigen Überzugsmittel gemäß einem der Ansprüche 1 bis 6 zur Beschichtung metallischer Substrate.

10. Verwendung der wässrigen Beschichtungsmittel gemäß einem der Ansprüche 1 bis 6 für wässrige Einbrennfüller.

11. Mit wässrigen Überzugsmittel gemäß einem der Ansprüche 1 bis 6 beschichtete Substrate.

## Claims

1. Aqueous coating compositions comprising a physical mixture, present in dispersion in water and, where appropriate, organic solvents, of
A at least one polyol which contains urethane groups and hydroxyl groups and contains chemically bonded hydrophilic groups, and
B at least one polyisocyanate blocked with pyrazol derivatives of the general formula (I) 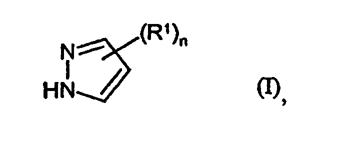
in which R¹ stands for one or more (cyclo)aliphatic hydrocarbon radicals having in each case from 1 to 12, preferably from 1 to 4, carbon atoms, which contains no chemically bonded hydrophilic groups, and in which n can be an integer from 0 to 3,
the proportion of components A and B being such that the molar ratio of blocked NCO groups in the crosslinker B to NCO-reactive groups in the polyol A or binder mixtures comprising polyol A is from 0.2 : 1 to 5 : 1.

2. Aqueous coating compositions according to Claim 1, **characterized in that** the polyol A containing urethane groups has an average molecular weight Mₙ (calculated from the stoichiometry of the starting material) of from 1600 to 50 000, an acid number of from 10 to 80, and a hydroxyl number of from 16.5 to 200.

3. Aqueous coating compositions according to Claim 1, **characterized in that** the polyol A containing urethane groups has an average molecular weight M n (calculated from the stoichiometry of the starting material) of from 1600 to 10 000, an acid number of from 15 - 40, and a hydroxyl number of from 30 to 130.

4. Aqueous coating compositions according to one of Claims 1 to 3, **characterized in that** the polyol A containing urethane groups is prepared from
A1 5 - 80% organic polyisocyanates,
A2 10 - 80% polyols and/or polyamines having an average molar weight Mn of at least 400,
A3 2 - 15% of compounds containing at least two isocyanate-reactive groups and at least one group capable of forming anions,
A4 0 - 20% polyols of molecular weight Mn from 62 to 400,
A5 0 - 20% compounds which are monofunctional or contain active hydrogen of different reactivity, these building blocks being located in each case at the chain end of the polymer containing urethane groups, and/or
A6 0 - 20% of compounds which are different from A2, A3, A4, and A5 and contain at least two NCO-reactive groups.

5. Aqueous coating compositions according to one of Claims I to 3, **characterized in that** the polyol A containing urethane groups is prepared from
A1 10 - 60% organic polyisocyanates,
A2 36 - 70% polyols and/or polyamines having an average molar weight Mn of at least 400,
A3 3 - 10% of compounds containing at least two isocyanate-reactive groups and at least one group capable of forming anions,
A4 1 - 10% polyols of molecular weight Mn from 62 to 400,
A5 0 - 20% compounds which are monofunctional or contain active hydrogen of different reactivity, these building blocks being located in each case at the chain end of the polymer containing urethane groups, and/or
A6 0 - 20% of compounds which are different from A2, A3, A4, and A5 and contain at least two NCO-reactive groups.

6. Aqueous coating compositions according to one of Claims 1 to 4, **characterized in that** in component B, as blocking agents for the isocyanate groups, 3,5-dimethylpyrazole or 3-methylpyrazole are used.

7. Process for preparing aqueous coating compositions according to one of Claims 1 to 6, **characterized in that** the crosslinker component B is admixed with the polyol resin A containing urethane and hydroxyl groups before or during its transfer to the aqueous phase.

8. Process for preparing aqueous coating compositions according to one of Claims 1 to 6, **characterized in that** the crosslinker component B is admixed with the polyol resin A containing urethane and hydroxyl groups before the transfer to the aqueous phase and the mixture thus obtained is subsequently dispersed in water.

9. Use of the aqueous coating compositions according to one of Claims 1 to 6 for coating metallic substrates.

10. Use of the aqueous coating compositions according to one of Claims 1 to 6 for aqueous baking surfacers.

11. Substrates coated with aqueous coating compositions according to one of Claims 1 to 6.

## Revendications

1. Produit de revêtement aqueux contenant un mélange physique à l'état dispersé dans l'eau et le cas échéant des solvants organiques, et consistant en :
A au moins un polyol contenant des groupes uréthannes et des groupes hydroxy, et également des groupes hydrophiles chimiquement combinés et
B au moins un polyisocyanate bloqué par un dérivé de pyrazole de formule générale (I) 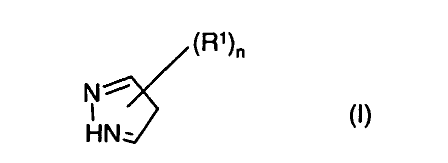
dans laquelle R¹ représente un ou plusieurs radicaux hydrocarbonés (cyclo)aliphatiques contenant chacun 1 à 12, de préférence 1 à 4 atomes de carbone, mais pas de groupes hydrophiles chimiquement combinés, et n est un nombre entier allant de 0 à 3,
les proportions relatives entre les composants A et B étant réglées en sorte que le rapport molaire entre les groupes NCO bloqués de l'agent réticulant B et les groupes réactifs avec les groupes NCO du polyol A ou du liant mélangé contenant le polyol A se situe entre 0,2:1 et 5:1.

2. Produit de revêtement aqueux selon la revendication 1, **caractérisé en ce que** le polyol A contenant des groupes uréthannes a un poids moléculaire moyen Mₙ (calculé à partir de la stoechiométrie du produit de départ) de 1 600 à 50 000, un indice d'acide de 10 à 80 et un indice d'hydroxyle dé 16,7 à 200.

3. Produit de revêtement aqueux selon la revendication 1, **caractérisé en ce que** le polyol A contenant des groupes uréthannes a un poids moléculaire moyen Mₙ (calculé à partir de la stoechiométrie du produit de départ) de 1 600 à 10 000, un indice d'acide de 15 à 40 et un indice d'hydroxyle de 30 à 130.
Le A 34 678 (01 967 230.2)

4. Produit de revêtement aqueux selon l'une des revendications 1 à 3, **caractérisé en ce que** le polyol A contenant des groupes uréthannes est préparé à partir de
A1 5 à 80 % de polyisocyanates organiques,
A2 10 à 80 % de polyols et/ou de polyamines à un poids moléculaire moyen Mₙ d'au moins 400,
A3 2 à 15 % de composés à au moins deux groupes réactifs avec les groupes isocyanates et au moins un groupe capable de former des anions,
A4 0 à 20 % de polyols de poids moléculaire Mₙ 62 à 400,
A5 0 à 20 % de composés monofonctionnels ou contenant des atomes d'hydrogène actif à réactivités différentes, ces constituants se trouvant chacun à l'extrémité de chaîne du polymère contenant des groupes uréthannes, et/ou
A6 0 à 20 % de composés autres que A2, A3, A4 et A5, et qui contiennent au moins deux groupes réactifs avec les groupes NCO.

5. Produit de revêtement aqueux selon l'une des revendications 1 à 3, **caractérisé en ce que** le polyol A contenant des groupes uréthannes est préparé à partir de
A1 10 à 60 % de polyisocyanates organiques,
A2 36 à 70 % de polyols et/ou de polyamines à un poids moléculaire moyen Mₙ d'au moins 400,
A3 3 à 10 % de composés contenant moins deux groupes réactifs avec les groupes isocyanates et au moins un groupe capable de former des anions,
A4 1 à 10 % de polyols de poids moléculaire Mₙ 62 à 400,
A5 0 à 20 % de composés monofonctionnels ou contenant des atomes d'hydrogène actif à réactivités différentes, ces constituants se trouvant chacun à l'extrémité de chaîne du polymère contenant des groupes uréthannes, et/ou
A6 0 à 20 % de composés autres que A2, A3, A4 et A5, et qui contiennent au moins deux groupes réactifs avec les groupes NCO.

6. Produit de revêtement aqueux selon la revendication 1 à 4, **caractérisé en ce que**, dans le composant B, l'agent bloquant utilisé pour les groupes isocyanates est le 3,5-diméthylpyrazole ou le 3-méthyl-pyrazole.

7. Procédé pour la préparation de produits de revêtement aqueux selon l'une des revendications 1 à 6, **caractérisé en ce que** l'on mélange le composant réticulant B et la résine de polyol A contenant des groupes uréthannes et hydroxyle avant ou durant leur passage dans la phase aqueuse.

8. Procédé pour la préparation de produits de revêtement aqueux selon l'une des revendications 1 à 6, **caractérisé en ce que** l'on mélange le composant réticulant B et la résine de polyol A contenant des groupes uréthanne et hydroxyle avant le passage dans la phase aqueuse, après quoi on disperse le mélange obtenu dans l'eau.

9. Utilisation des produits de revêtement aqueux selon l'une des revendications 1 à 6, pour le revêtement de substrats métalliques.

10. Utilisation des produits de revêtement aqueux selon l'une des revendications 1 à 6, pour des mastics aqueux à cuire au four.

11. Substrats revêtus par des produits de revêtement aqueux selon l'une des revendications 1 à 6.
